(19) Europäisches Patentamt
European Patent Office
Office européen des brevets

(11) **EP 2 871 762 B1**

(12) **EUROPEAN PATENT SPECIFICATION**

(45) Date of publication and mention of the grant of the patent:
**27.02.2019 Bulletin 2019/09**

(51) Int Cl.:
*H02M 3/157* *(2006.01)*     *H02M 1/14* *(2006.01)*

(21) Application number: **13191818.7**

(22) Date of filing: **06.11.2013**

(54) **Voltage converter and method for voltage conversion**

Spannungswandler und Verfahren zur Spannungswandlung

Convertisseur de tension et procédé de conversion de tension

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.05.2015 Bulletin 2015/20**

(73) Proprietor: **ams AG**
**8141 Premstätten (AT)**

(72) Inventors:
• **Fiocchi, Carlo**
**27011 Belgioioso (PV) (IT)**
• **Draghi, Paolo**
**27058 Voghera (PV) (IT)**

(74) Representative: **Epping - Hermann - Fischer Patentanwaltsgesellschaft mbH Schloßschmidstraße 5 80639 München (DE)**

(56) References cited:
**EP-A1- 1 087 507     US-A1- 2009 160 422**

• St: "LM193, LM293, LM393", , 18 January 2013 (2013-01-18), pages 1-20, XP055323502, Retrieved from the Internet: URL:https://www.rcscomponents.kiev.ua/data sheets/CD00000465-105244.pdf [retrieved on 2016-11-28]

## Description

The present invention is related to a voltage converter and a method for voltage conversion.

A voltage converter converts an input voltage provided at an input of the voltage converter to an output voltage applied to an output of the voltage converter. DC-to-DC converters are often used in portable electronic devices. The voltage converter usually stores an input energy temporarily and then releases the energy to the output. The energy may be stored in a magnetic field, for example by a coil or a transformer, or in an electric field, for example by a capacitor.

Hysteretic switching converters are often used as they can be implemented very simply. Moreover, they offer the advantage of turning off the most power-consuming section of the voltage converter for a large part of the operating time. Due to the switching mode, a large voltage ripple can often be observed in the output voltage.

Document US 2009/0160422 A1 describes a boost converter with adaptive coil peak current. A power conversion circuit comprises a coil, a switch, a sense resistor, a peak current comparator and a binary counter. The peak-current comparator is coupled at an inverting input to a digital-to-analog converter and at a non-inverting input to the sense resistor. On its output side, the peak-current comparator is coupled via an off-time generator and a gate driver to the switch.

Document EP 1087507 A1 describes a method of controlling a DC-DC converter. The converter comprises an inductor, an upper and a lower switch and voltage comparators. A current flowing through the upper switch is read on a sensing resistance in series to the upper switch by an operational amplifier outputting a voltage proportional to current. A voltage comparator has an input coupled to an output of a digital/analog converter. The other input of the voltage comparator is either coupled to a linear ramp voltage generator or to the voltage produced by the operational amplifier.

It is an object of the present application to provide a voltage converter and a method for voltage conversion with a reduced ripple in the output voltage.

This object is achieved by the subject-matter of the independent claims. Further embodiments are subject of dependent claims.

In an embodiment a voltage converter comprises a coil, a switch coupled in series to the coil and a control module that is coupled to a control terminal of the switch. The control module is designed to provide a control signal to the control terminal of the switch such that a coil current flowing through the coil is selectively limited to a selected current value of at least two predetermined current values.

Advantageously, at least two current values are predetermined such that a maximum or peak of the coil current is one of the at least two predetermined current values. By selecting the smallest current value of the at least two predetermined current values a low ripple in an output voltage of the voltage converter can be achieved.

In an embodiment the voltage converter operates in a cycle having a first and a second phase, wherein the control module generates the control signal such that the switch is in a conducting state in the first phase and is in a non-conducting state in the second phase that follows the first phase.

Thus, energy is stored in the coil in the first phase, whereas energy is provided by the coil to a converter output of the voltage converter in the second phase.

In an embodiment the control module selects the selected current value of the at least two predetermined current values. The control module performs the selection depending on a number of cycles in which the coil current is limited to the selected current value.

In an embodiment the voltage converter provides a current sense signal to the control module. Thus, the voltage converter comprises a current sensor that generates the current sense signal. The current sensor may be connected in series to the coil. The current sense signal depends on the coil current. The current sensor may also be connected in series to the switch.

In an embodiment the voltage converter starts a first cycle having the first phase and the second phase after an output voltage of the voltage converter has dropped below a first threshold value.

In an embodiment the control module terminates the first phase of the first cycle or another cycle and starts the second phase of the first cycle or the other cycle, when the coil current rises to the selected current value.

In an embodiment the control module selects the lowest current value of the at least two predetermined current values for the first cycle, when the output voltage falls below the first threshold value.

In an embodiment in one case, the output voltage of the voltage converter is higher than a second threshold value after the first cycle. In that case the control module sets the voltage control in an idle state after the first cycle.

In an embodiment, in another case, the output voltage of the voltage converter is smaller than the second threshold value after the first cycle and, thus, the control module does not set the voltage converter in the idle state. The voltage converter continues operation with at least one further cycle having the first phase and the second phase.

In an embodiment the first threshold value and the second threshold value are equal.

In an alternative embodiment, the first threshold value is smaller than the second threshold value.

In an embodiment the control module selects a higher current value of the at least two predetermined current values for a next cycle, when a number of the cycles at a selected current value is larger than a predetermined cycle number and when an output voltage of the voltage converter is below the second threshold value. The next cycle directly or indirectly follows the first cycle.

In an embodiment the control module keeps the selected current value of the at least two predetermined current values for the next cycle, when a number of the cycles at the selected current value is smaller or equal than the predetermined cycle number and when the output voltage of the voltage converter is below the second threshold value.

In an embodiment the control module sets the voltage converter in the idle state after a cycle, when the output voltage of the voltage converter is higher than the second threshold value.

In an embodiment the control module keeps the selected current value of the at least two predetermined current values for a next cycle, when a duration of the idle state is shorter than a predetermined duration and when the output voltage of the voltage converter falls below the first threshold value during the duration of the idle state. The predetermined duration may be equal to a delay time.

In an embodiment the control module selects a lower current value of the at least two predetermined current values for the next cycle, when a duration of the idle state is longer than the predetermined duration and when the output voltage of the voltage converter falls below the first threshold value during the duration of the idle state.

In an embodiment the control module comprises a counter that counts a number of cycles.

In an embodiment the counter comprises an impulse input coupled to the control terminal of the switch for receiving the control signal and a counter output for providing a counter signal. The selected current value of the at least two predetermined current values is selected by the counter signal.

In an embodiment the counter is realized as a preset counter. The preset counter changes a value of the counter signal once the predetermined cycle number is reached. The preset counter can also be called a predetermined counter.

In an embodiment the control module comprises a comparator having a first input coupled to an output of the voltage converter, a second input to which a first threshold value is provided and an output that is coupled to a reset input of the counter.

In an embodiment the control module comprises a delay circuit that couples the output of the comparator to the reset input of the counter. The delay time is set by the delay circuit.

In an embodiment the voltage converter is implemented as step-up converter, also named Boost converter, as step-down converter, also named Buck converter, or as step-up/step-down converter, also named Boost-Buck converter.

Preferably, the voltage converter is realized as hysteretic DC-to-DC converter.

In an embodiment a method for voltage conversion comprises providing an input voltage to a voltage converter which comprises a coil and a switch coupled in series to the coil. A selected current value of at least two predetermined current values is selected. Moreover, a control signal is provided to the control terminal of the switch such that a coil current flowing through the coil is limited to the selected current value of the at least two predetermined current values. Furthermore, an output voltage is generated by the voltage converter.

Advantageously, the height of the ripple of the output voltage can be influenced selecting one of the at least two predetermined current values. Preferably, the voltage converter adapts a peak value of the coil current as a function of a load current.

The following description of Figures of exemplary embodiments may further illustrate and explain the invention. In so far as components, circuits and method steps correspond to one another in terms of their function in different Figures, the description thereof is not repeated for each of the following Figures.

Figures 1A and 1B show an exemplary embodiment of a voltage converter and of a timing diagram.

Figures 2A and 2B show a further embodiment of the voltage converter and of the timing diagram.

Figures 3A and 3B show exemplary embodiments of a detail of the voltage converter and of the timing diagram.

Figures 4A, 4B, 5A and 5B show alternative embodiments of the voltage converter.

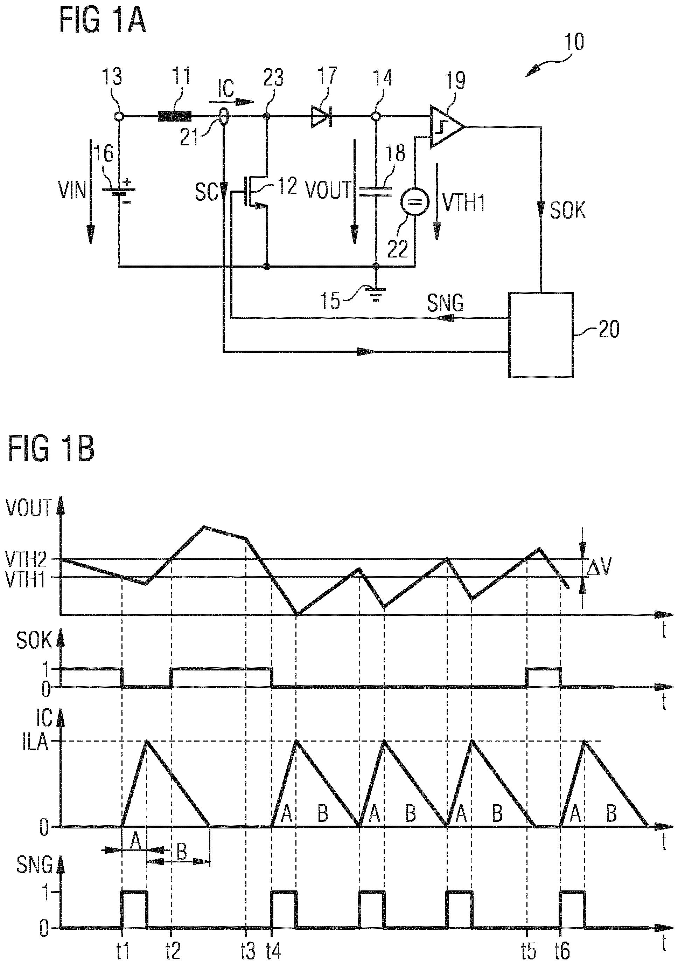

Figure 1A shows an exemplary embodiment of a voltage converter 10 that comprises a coil 11 and a switch 12. The coil 11 and the switch 12 are connected in series. The coil 11 can also be named as an inductor. The switch 12 is implemented as a field-effect transistor, abbreviated to FET. Preferably, the switch 12 is realized as an n-channel field-effect transistor. The switch 12 is designed as a metal-oxide-semiconductor field-effect transistor, abbreviated to MOSFET. Moreover, the voltage converter 10 comprises a converter input 13 and a converter output 14. A series circuit comprising the coil 11 and the switch 12 couples the converter input 13 to a reference potential terminal 15. The coil 11 is connected to the converter input 13, whereas the switch 12 is connected to the reference potential terminal 15. A battery 16 is arranged between the converter input 13 and the reference potential terminal 15. The voltage converter 10 comprises a diode 17 that couples a node 23 between the coil 11 and the switch 12 to the converter output 14. A capacitor 18 couples the converter output 14 to the reference potential terminal 15. A comparator 19 of the voltage converter 10 has a first input coupled to the converter output 14.

Moreover, the voltage converter 10 comprises a control module 20 that is connected on its output side to a control terminal of the switch 12. A current sensor 21 of the voltage converter 10 is connected on its output side to the control module 20. The current sensor 21 is arranged between the coil 11 and the switch 12. The current sensor 21 is connected in series to the coil 11. An output of the comparator 19 is connected to an input of the control module 20. A reference voltage source 22 couples a second input of the comparator 19 to the reference potential terminal 15.

The battery 16 provides an input voltage VIN. The input voltage VIN can be tapped between the converter input 13 and the reference potential terminal 15. The voltage converter 10 generates an output voltage VOUT by the input voltage VIN. The output voltage VOUT is applied between the converter output 14 and the reference potential terminal 15. The reference voltage source 22 provides a first threshold value VTH1 to the second input of the comparator 19. The comparator 19 obtains a small hysteresis ΔV. Thus, the comparator 19 applies also a second threshold value VTH2. The second threshold value VTH2 is equal to the first threshold value VTH1 plus the hysteresis ΔV. The comparator 19 generates a comparator signal SOK depending on a comparison of the output voltage VOUT and the first respectively second threshold value VTH1, VTH2. The control module 20 generates a control signal SNG to a control terminal of the switch 12. A current sense signal SC that is generated by the current sensor 21 is provided to the control module 20.

In the DC/DC hysteretic converter 10 the coil 11 is precharged up to a peak current value ILA regardless of the load current value at any charging cycle.

In an alternative embodiment, not shown, the diode 17 is replaced by a further switch. The control module 20 generates a further control signal to a control terminal of the further switch.

Figure 1B shows an exemplary embodiment of a timing diagram of signals obtained in the voltage converter 10 shown in Figure 1A. According to Figure 1B, the output voltage VOUT, the comparator signal SOK, a coil current IC that flows through the coil 11 and the control signal SNG are shown depending on a time t.

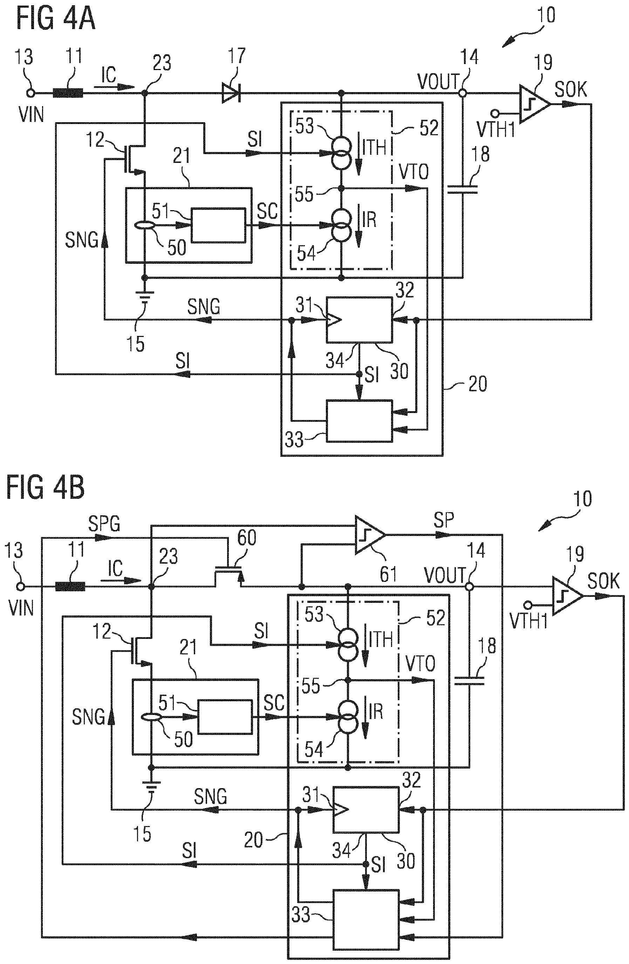

In a step up hysteretic converter anytime the output voltage VOUT stays above a given threshold, such as the first threshold value VTH1, a driver is in tri-state. The driver comprises the control module 20 and the switch 12. A first coil terminal is permanently connected to the input voltage VIN that is a positive supply voltage. Once the first threshold value VTH1 is crossed, in a first phase A the comparator signal SOK starts the conduction of a power device, for example the switch 12 which connects a second coil terminal to the reference potential terminal 15. The switch 12 is implemented as an n-channel MOSFET. The coil 11 obtains an inductivity L. In this way the coil current IC increases from zero at a rate given by VIN/L. When the coil current IC reaches a peak current value ILA, a current comparator as shown in Figures 4A and 4B stops the conduction of the switch 12.

In a second phase B, a second power device, such as the diode 17 or a further switch 60 as shown in Figure 4B, connects the second coil terminal to the converter output 14 that is coupled to a load. The further switch 60 is realized as a p-channel MOSFET. In the second phase B, being the output voltage VOUT higher than the input voltage VIN, the coil current IC tends to decrease at a rate given by (VOUT-VIN)/L. If the second power device is implemented as the further switch 60 as illustrated in Figure 4B, a further comparator 61 stops the conducting state of the further switch 60 as soon as the coil current IC drops lower than a given threshold, being usually this value near zero. In case of the diode 17 the conducting is automatically stopped. At this point the output voltage VOUT is sensed again: If the output voltage VOUT stays above the second threshold value VTH2, the driver enters tri-state and the charging sequence stops; if not, another similar cycle takes place: The switch 12 will conduct again to recharge the coil 11, the peak current value ILA is reached again to decide to turn the switch 12 in a non-conducting state and the further switch 60 will conduct to discharge the coil energy into the load. The sequence will eventually continue for more cycles like this until the output voltage VOUT is larger than the second threshold value VTH2 to stop the driver conduction and end the sequence. It may be that the second threshold value VTH2 that defines the stop of the sequence is exactly the same as the first threshold value VTH1 which triggers the sequence or a small hysteresis is provided to the system by making the second threshold value VTH2 a bit bigger.

In each charging cycle some aspects can be discussed: When the switch 12 stops conducting, the coil current IC which initially flows to the reference potential terminal 15 is suddenly diverted to the converter output 14. Because of the inductive parasitics of a ground line connected to the reference potential terminal 15, the huge current derivative generates large noise on the ground line. A smaller value for the peak current value ILA would make a proportionally reduced disturbance. Referring to the power dissipation, being the charge delivered to the load clearly proportional to the peak current value ILA, it can be expected that the ripple amplitude would share the same dependence. This implies that the time it takes from one conduction sequence and the next one is proportional to the peak current value ILA as well. So a larger peak current value ILA would ask for less sequences in a time unit, which is a benefit for efficiency. Unfortunately, during each conduction sequence, the peak current make a loss by crossing the power devices, which depends on its value in a parabolic manner. Hence the total system power dissipation in a time unit is larger in case a large peak current ILA is set.

The minimum value for the peak current value ILA can be calculated: If the conduction of the switch 12 takes place in a time Tn and the conduction of the further switch 60 takes place in a time Tp, the maximum charge that can be delivered to the load is the one coming after an infinite sequence of cycles, where the conduction of the switch 12 takes place immediately after the further switch 60 stops conducting. Supposing that the conduction of the further switch 60 is terminated when the coil current IC is exactly zero, the average current is given by ILA*Tp/[2*(Tp+Tn)]. In addition, being Tp and Tn determined by the coil current slopes VIN and VOUT-VIN, the maximum current that the driver can deliver would be given by

$$ILA*VIN/(2*VOUT).$$

The current limiter value that is the peak current value ILA comes directly from the maximum specified load current with no degree of freedom, being the input voltage VIN and the output voltage VOUT fixed.

Simplicity of the non-continuous time solution shown in Figures 1A to 5B comes from the fact that, if compared to a continuous time solution, stability is not a concern and some circuitry like loop compensation filter can be omitted. This makes shorter design phase and saves silicon area. In addition the offered performance in terms of transient stability is superior: Immediately after a sudden load variation, while the continuous time solution increases the output current little by little, the hysteretic converter is forced to immediately drive the maximum current set by the current limiter. In this way the output undershoot results are much smaller than in the continuous time counterpart.

In Figures 1A and 1B a basic configuration of a step-up DC/DC converter 10 is elucidated. The first terminal of the coil 11 is permanently connected to the input voltage VIN. The second terminal of the coil 11, depending on the status of the digital control signal SNG, is connected to ground in case the control signal SNG is high or to the converter output 14 for the control signal SNG low and a positive current IC going from the converter input 13 to the converter output 14. As shown in Figure 4B, the diode 17 may be replaced by a switch 60 and an associated comparator 61 is implemented to prevent a current flow from the converter output 14 to the converter input 13 that would discharge the capacitor 18. When the control signal SNG trips high, the switch 12 conducts and the coil current IC increases at a rate VIN/L. When the coil current IC reaches the peak current value ILA, a further comparator 52 switches the control signal SNG to turn the switch 12 in a non-conducting state. The coil current IC would force the diode 17 in the conducting state to reach the converter output 14 and to charge the capacitor 18. Being the output voltage VOUT higher than the input voltage VIN, the coil current IC tends to decrease until it becomes negative. At this point the diode 17 blocks the conduction and, depending on the status of the comparator signal SOK, the control signal SNG trips high again to start a new charging cycle or keeps the second terminal of the coil 11 floating to save power consumption until the output voltage VOUT drops lower than the first threshold value VTH1.

In Figure 1B the coil current IC is regulated as follows: At a first point of time t1 the output voltage VOUT is recognized too low and the control signal SNG trips high. The coil current IC charges up to the peak current value ILA when the control signal SNG goes low. The coil current IC is diverted to the converter output 14 whereas the output voltage VOUT tends to increase. When the coil current IC reaches zero, the output voltage VOUT is higher than the second threshold value VTH2, also named positive threshold, crossed at a second point of time t2, and the first sequence is stopped. At a third point of time t3 the load current increases suddenly and the output voltage VOUT drops fast. At a fourth point of time t4, the output voltage VOUT crosses the first threshold value VTH1, also named negative threshold, hence a new sequence starts: The control signal SNG is high again, the coil current IC increases while the load still decreases, being floating in this phase. The peak current value ILA is reached again and the diode 17 enters conduction to stop the output voltage VOUT from falling. May be more cycles take place before bringing the output voltage VOUT higher than the positive threshold VTH2. This takes place at a fifth point of time t5 and the sequence is terminated as soon as the coil current IC is zero and the output voltage VOUT is recognized high enough. At a sixth point of time t6 the output voltage VOUT is still too low and a new sequence restarts.

It is evident that light and heavy loads are treated in the same manner with the same large peak current value ILA. The peak current value ILA set by the current limiter is directly dependent on the maximum load current foreseen for the voltage converter 10: It can be shown that, in order to provide an average load current Iload_max, the current limiter that stops the driver conduction has a threshold given by Iload_max*2/D, being D the percentage of the driver activity when the power device is charging up the load capacitor 18.

The ripple amplitude evidently determined by the peak current value ILA, can be made independent versus the maximum load current specification only by playing on the value of the load capacitor 18 which makes a requirement on an external component that is heavy in terms of printed-circuit-board occupation and possibly costs.

While in a continuous time converter the maximum instantaneous current sunk and sourced by the supply battery 16 is always correlated to the load current, in a hysteretic converter its value is always the peak current value ILA. This makes evident stresses in term of supply bouncing and in requirements about supply filtering.

A larger peak current value ILA worsens efficiency: In fact while the time the driver is off - not to dissipate - is proportional to the peak current value ILA, the conduction losses have a parabolic dependence on its value. Hence average consumption gets larger with higher peak current value ILA.

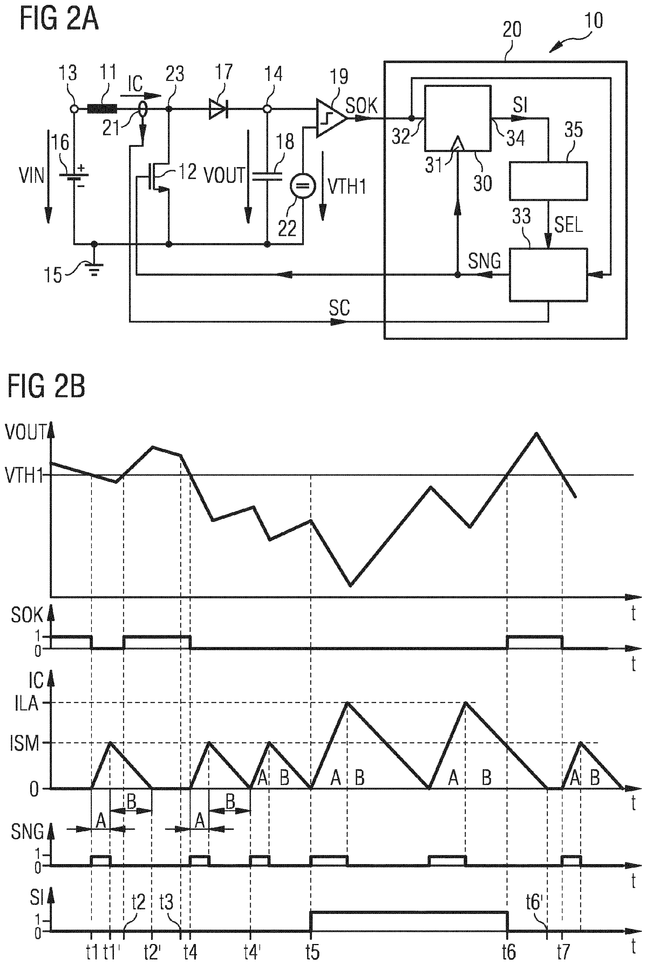

Figure 2A shows an exemplary embodiment of the voltage converter 10 that is a further development of the voltage converter shown in Figure 1A. The control module 20 comprises a counter 30. An impulse input 31 of the counter 30 is coupled to the control terminal of the switch 12. A reset input 32 of the counter 30 is coupled to the output of the comparator 19. Moreover, the control module 20 comprises a control circuit 33 having an output that is connected to the control terminal of the switch 12 and to the impulse input 31. The output of the comparator 19 is coupled to an input of the control circuit 33. Furthermore, a counter output 34 of the counter 30 is coupled to a further input of the control circuit 33. A current limit circuit 35 is arranged between the counter output 34 and the further input of the control circuit 33. Additionally, the current sensor 21 is connected to an additional input of the control circuit 33.

The control signal SNG is generated by the control circuit 33 and provided to the control terminal of the switch 12 as well as to the impulse input 31. The comparator signal SOK is applied to the input of the control circuit 33. The control circuit 33 receives the current sense signal SC. A counter signal SI is generated by the counter 30 depending on the control signal SNG received at the impulse input 31 and on the comparator signal SOK received at the reset input 32. The counter signal SI is provided via the counter output 34 to the current limit circuit 35.

Figure 2B shows an exemplary embodiment of a timing diagram of signals obtained in the voltage converter 10 shown in Figure 2A. The output voltage VOUT, the comparator signal SOK, the coil current IC, the control signal SNG and the counter signal SI are shown depending on the time t. The current limit circuit 35 provides a selected current value SEL of two predetermined current values ISM, ILA to the control circuit 33. The two predetermined current values are a lowest current value ISM and a higher current value ILA. The control circuit 33 compares the selected current value SEL to the current sense signal SC. The control signal SNG is generated by the control circuit 33 depending on the current sense signal SC, on the selected current value SEL and on the comparator signal SOK. In Figure 2B the first and the second threshold value VTH1, VTH2 are equal. Thus, the comparator 19 is realized without hysteresis. The value of ΔV is zero.

A first cycle is between the first point of time t1 and the second point of time t2' and comprises the first phase A and the second phase B. When the output voltage VOUT falls below the first threshold value VTH1 at the first point of time t1, the comparator signal SOK changes its value and the control circuit 33 generates a control signal SNG having a value to set the switch 12 in a conducting state, starting the first phase A. The counter 30 generates a counter signal SI with such a value that the current limit circuit 35 selects the lower of the two predetermined current values ILA, ISM as the selected current value SEL. The control circuit 33 compares the current sense signal SC to the selected current value SEL at the point of time t1.

When the current sense signal SC becomes equal to the selected current value SEL at the point of time t1', the control circuit 33 terminates the first phase A and starts the second phase B by generating the control signal SNG with a value that sets the switch 12 in a non-conducting state. Thus, the lowest current value ISM of the two predetermined current values ISM, ILA is selected for the first cycle. In the second phase B the output voltage VOUT rises. At the second point of time t2, the output voltage VOUT becomes higher than the second threshold value VTH2. Thus, the control circuit 33 sets the voltage converter 10 in an idle state. The counter 30 counts one pulse of the control signal SNG at the impulse input 31 during the first cycle A.

The output voltage VOUT falls below the first threshold value VTH1 at the fourth point of time t4 triggering again the operation of the voltage converter 10. At the fourth point of time t4, a further first cycle starts. The second phase B of the further first cycle ends, when the coil current IC becomes zero. Thus the control circuit 33 detects the end of the second phase B by means of the current sense signal SC. Since, at the end of the further first cycle at the point of time t4' the output voltage VOUT is still smaller than the second threshold value VTH2, the next cycle starts. At the end of the next cycle, which is the second cycle, the output voltage VOUT is still smaller than the second threshold value VTH2. The second cycle ends at the fifth point of time t5. The counter 30 counts the cycles using the pulses of the control signal SNG. In the example shown in Figure 2B, the counter 30 has a predetermined cycle number of 2. Since the counts of the counter 30 achieve the value 2 that is the predetermined cycle number at the end of the second cycle the counter signal SI changes its value. Thus, the current limit circuit 35 provides the higher current value ILA to the control circuit 33. The first phase A of the next cycle that is a third cycle is triggered at the fifth point of time t5. At the third cycle, the first phase A stops when the current sense signal SC reaches the selected current value SEL, now having the higher current value ILA. Thus, a higher current coil IC is achieved in the third cycle in comparison to the first and the second cycle.

The control module 20 uses the higher current value ILA from now on. At the sixth point of time t6 the output value becomes higher than the second threshold value VTH2 and thus the operation of the voltage converter 10 stops at the point of time t6'. The comparator output signal SOK resets the counter 30 when the output voltage VOUT rises above the second threshold value VTH2. At a seventh point of time t7, the output voltage VOUT again falls below the first threshold value VTH1 and an additional cycle starts. Since the counter 30 is reset at the sixth point of time t6, the counter 30 generates the counter signal SI having a value such that the selected current value SEL obtains the smaller current value ISM by means of the current limit circuit 35.

The coil current IC is regulated in the following manner: If less than two charging cycles take place with the output voltage VOUT lower than the second threshold value VTH2 (suppose equal positive and negative threshold values VTH1, VTH2 for sake of simplicity), the smaller peak current value that is the lowest current value ISM is selected. On the contrary, in case the output voltage VOUT stays lower than the second threshold value VTH2 for more than two consecutive charging cycles, the higher current value ILA is selected at the fifth point of time t5. As soon as the output voltage VOUT is recovered above the second threshold value VTH2 at the sixth point of time t6, the lowest current value ISM is set.

The control module 20 can be implemented as a state machine. Anytime the comparator signal SOK goes low, the counter 30 is not forced to reset. As soon as a sufficient number of transitions at the control signal SNG are counted before the comparator signal SOK is asserted again, the counter 30 trips and the counter signal SI is used to set the higher current value ILA as threshold for the current limiter. As soon as the proper value of the output voltage VOUT is recovered, the counter 30 is reset, the counter signals SI goes low. In this way a new charging sequence starts with the low current limiter threshold ISM.

The possibility to immediately charge the load at the maximum drive capability of the voltage converter 10 may be advantageous in terms of making a prompt response from the driver after a huge load transient, but in most cases it is seen as over-engineered once the peak current is set by the above reported relationship. Moreover, the ripple is intrinsic in a hysteretic voltage converter so that it makes a minor concern to keep extremely small the undershooting consequent to a huge load transient. Hence there is room for a tradeoff between somehow larger undershooting spikes and the reduction in supply noise and dissipation in case the voltage converter 10 does not immediately operate at its maximum drive capability.

The control circuit 33 is implemented as a small state machine. The control circuit 33 comprises a few logic gates.

As a result, the tradeoff between design complexity plus area and the benefits in terms of noise and efficiency are advantageous.

As negative threshold VTH1 for the output voltage VOUT the value below which the driver must be restarted is referred. As positive threshold VTH2 the value above which the driver enters tri-state is referred. When the output negative threshold VTH1 crossing is recognized, showing a too low value for the regulated output voltage VOUT, the driver is being activated, as usual, but the current limiter sets the peak at the lowest current value ISM.

The counter 30 comprises a not-shown flip-flop. The flip-flop is realized as a SR flip-flop: Being set by the comparator signal SOK at the time when the positive threshold for the output voltage VOUT is crossed, it ensures that at the start of any charging sequence the peak current is properly fixed at the lowest current value ISM. Next the evolution of the current limiter is determined by the counter 30: If the output voltage VOUT still remains under the target threshold value VTH2 after one cycle so that the charging sequence is not stopped, the counter 30 counts how many times the switch 12 is activated that is the number of cycles inside the sequence. The counter 30 is designed or programmed to trip the counter signal SI after a suitable number of cycles. This determines the reset signal to the SR flip-flop which has the effect that the higher current value ILA is the selected current value SEL.

In this way the desired functionality is provided to the voltage converter 10: If the load current is so large that the initial current value ISM of the peak current of the coil current IC is not large enough, the output voltage VOUT will remain lower than the second threshold value VTH2 so that, after the counter 30 trips, the higher peak current value ILA is recovered to support the largest drive capability. On the contrary, at lighter loads, the output voltage VOUT is capable to rise above the positive threshold value VTH2 under the injection of the smaller peak current ISM, hence ensuring improved efficiency, smaller ripple and lower supply noise.

In the end, when the output voltage VOUT crosses the positive threshold value VTH2, the flip-flop is set again so that the lowest current value ISM is given again, ready for the next sequence to start.

Of course the number of pulses or cycles necessary to trip the counter 30 becomes a function of the output load capacitance: Usually, in case of light loads, it is sufficient one pulse only to recharge the output but if a large capacitance is used or some hysteresis is present between negative and positive thresholds VTH1, VTH2, it may be more. The counter 30 may be implemented as a programmable counter. Advantageously, this allows the user of a free choice of the output capacitor 18 while keeping optimal efficiency performance. The number of counted pulses or cycles cannot be too high, of course: If so, in fact, the output voltage VOUT would tend to drift excessively low in case of a large load current.

Moreover, the time when the counter 30 is increased might be determined when the switch 12 is activated into the conducting state or at the time the switch 12 goes into the non-conducting state. The second choice is preferred to avoid that the current limiter varies its threshold when it is active, being its settling not very fast. In general, a signal that takes place once during a charging cycle is sufficient to increase the number counted by the counter 30.

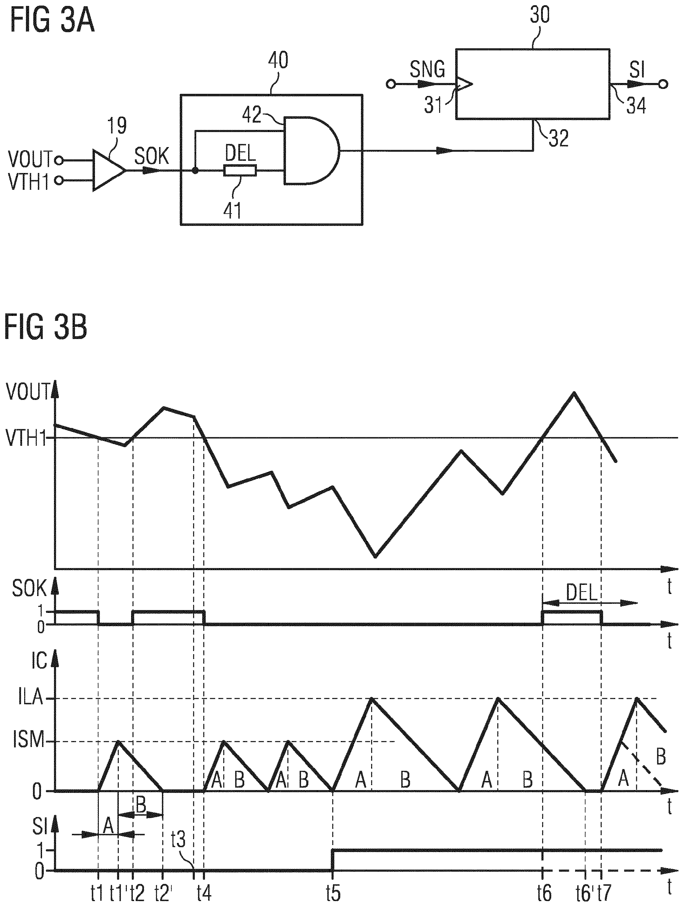

At the same time it is also possible to set the flip-flop in a different way: In fact, in case a large load current is always present, it might look questionable to start the charging sequence with a small current. As in case of a large load current the time it takes from the end of a sequence and the start of a new one is small, one might think of a delay circuit or a timer as shown in Figure 3A before setting the SR flip-flop again. In this way, at the start of the new sequence the flip-flop is still reset to determine the higher peak current value ILA since the beginning of the operation. The determination of a delay time DEL before the flip-flop is set depends on the output capacitor 18 and the load current representing the crossover between low noise, higher efficiency operation and full load current. The delay time DEL may be programmable. Making the delay time DEL programmable would give remarkable benefits in terms of application flexibility.

The control module 20 is realized as a state machine adopted to provide the adaptive setting of the peak current in the Boost voltage converter 10. In the Boost converter 10 of Figure 1A, as soon as the output voltage VOUT drops below the first threshold value VTH1, the switch 12 is turned in the conducting state by the control signal SNG and the coil current IC tends to increase linearly. When the coil current IC becomes higher than a given lowest current value ISM in Figure 2B, which makes the peak current of the system, the switch 12 is turned in the non-conducting state and the conduction from the coil 11 to the converter output 14 is started across the diode 17. Alternatively, a further switch 60 can be used instead of the diode 17. The current discharges and when it reaches zero the state machine decides to start a new conduction of the switch 12 or not, depending if the output voltage VOUT still stays lower than the second threshold value VTH2.

The counter 30 is added to count how many times the switch 12 is forced to conduction before the output voltage VOUT is recovered and is higher than the second threshold value VTH2: Its reset signal is not active, being the output voltage VOUT low, so that any transition regarding the control signal SNG is capable to increase the counter content that is the number counted by the counter 30. It is preferable to increase the number at falling edges for the control signal SNG and not at the rising edges: In this case, in fact, the current limiter would be operating having its threshold settling from one value to the other so that some unpredictability might come. Once the counter 30 reaches a programmable content, the counter signal SI is triggered to increase the threshold that sets the larger current value ILA of the peak current.

As soon as the output voltage VOUT is recovered, the counter 30 would be reset in case the time it takes before the comparator signal SOK goes low again is sufficiently long. If this time is short, on the contrary, a delay circuit 40 shown in Figure 3A would mask a transition of the comparator signal SOK and would not reset the counter 30. This is the case when a large current is at the load so that the output voltage VOUT discharges soon. In this way, as soon as the output voltage VOUT drops low again, the voltage converter 10 is forced to source the largest peak current ILA since the beginning, which complies with an high load current condition.

Thus, the peak current is adapted versus the load current with a simple state machine. The voltage converter 10 operates, by default, with a current which is lower than the maximum one foreseen by the maximum drive capability requirements. At the same time, anytime it is recognized that the load current tends to be too large, the state machine produces a signal which increases the peak current to cope with the increased load current requirements. Of course the state machine takes care also the recover to the smaller peak current value ISM in case the load current goes back to a smaller value. In this way anytime the load current is appreciably lower than the maximum foreseen one, at the same time, a smaller ripple, less supply noise and improved efficiency is achieved.

The advantages are: The peak value in a cycle is not determined by the maximum drive capability constraint. At light loads the current sunk and sourced by the supply rails always does not reach the maximum value as a peak, but depend on the load current value. The supply noise is low. The efficiency is optimized since conduction losses depend quadratically on the peak current.

The lowest current value ISM is lower than the higher current value ILA. The higher current value ILA sets the maximum driving capability. Thus, the initial peak of the coil current IC is lower. An N-counter 30 is used so that if more than N cycles are necessary to recover the output voltage VOUT, the peak current is then set to the higher current value ILA. Once the output voltage VOUT is recovered the counter 30 is reset so that the new sequence restarts with the lowest current peak value ISM. The counter 30 is not immediately reset but with the delay time DEL. In this way, in case of heavy loads the sequence would restart with the highest peak current value ILA since the beginning.

At light loads less than N pulses are advantageously required to recover the output voltage VOUT. Hence less noise and higher efficiency can be achieved by means of lower peak current pulses. At heavy loads the peak current is always the highest one so that worst case negative ripple remains unaltered.

In an alternative embodiment, not shown, more than two current values are predetermined. Thus, in general, the selected current value SEL can be selected from among at least two predetermined current values. During operation, the voltage converter 10 starts with the lowest of the predetermined current values, and then switches to a second lowest predetermined current value. The predetermined current values are used in a rising order, starting with the lowest predetermined current value ISM.

In an alternative embodiment, not-shown, the control module 20 comprises at least a further counter. The at least a further counter comprises an impulse input coupled to the control terminal of the switch 12 for receiving the control signal SNG and a counter output for providing at least a further counter signal. The selected current value of at least three predetermined current values is selected depending on the counter signal SI and the at least a further counter signal. The at least three predetermined current values may comprise the lowest current value ISM, the second lowest predetermined current value and the higher current value ILA. The second lowest predetermined current value has a value between the lowest current value ISM and the higher current value ILA. The at least a further counter may by programmable. Thus, the at least a further counter trigger different, increasing current values of the peak current.

In an alternative embodiment, not shown, the predetermined cycle number is different from 2. The predetermined cycle number is in general at least 1.

In an alternative embodiment, not shown, the comparator 19 is realized with a hysteresis. Thus, the first threshold value VTH1 is different from the second threshold value VTH2. The first threshold value VTH1 is smaller than the second threshold value VTH2.

Figure 3A shows an exemplary embodiment of a detail of the control module 20 which is a further development of the control module 20 of Figure 2A. The control module 20 comprises a delay circuit 40. The delay circuit 40 is arranged between the output of the comparator 19 and the reset input 32 of the counter 30. The delay circuit 40 comprises a delay element 41 and a logic circuit 42. A first input of the logic circuit 42 is directly connected to the output of the comparator 19. A second input of the logic circuit 42 is coupled via the delay element 41 to the output of the comparator 19. An output of the logic circuit 42 is coupled to the reset input 32 of the counter 30. The logic circuit 42 is realized as an AND gate.

When the output voltage VOUT becomes smaller than the first threshold value VTH1, the comparator signal SOK indicates that the control circuit 33 has to start a first cycle. The comparator signal SOK obtains the logic value 0 and thus a signal provided by the delay circuit 40 immediately also obtains the logic value 0. Therefore, the counter 30 is not reset.

When the output voltage VOUT becomes larger than the second threshold value VTH2, the comparator signal SOK obtains the logic value 1 and the control circuit 33 sets the voltage converter 10 in the idle state. The delay element 41 causes the signal at the output of the delay circuit 40 to obtain the logic value 1 after a delay time DEL that is set by the delay element 41. The signal at the output of the delay circuit 40 having the logic value 1 resets the counter 30. Therefore, this reset of the counter 30 is only obtained if an idle time is larger than the delay time DEL. The idle time is the duration of the idle state. During the idle time the voltage converter 10 does not provide a voltage conversion. In the idle state, the switch 12 is permanently set in the non-conducting state by the control circuit 33. After the reset of the counter 30 the selected current value SEL has the lowest current value ISM determined by the counter signal SI. If, however, the counter 30 is not reset in the idle time, the counter signal SI has the effect that the selected current value SEL obtains the higher current value ILA.

Figure 3B shows an exemplary timing diagram for the voltage converter 10 using the delay circuit 40 shown in Figure 3A. The timing diagram of Figure 3B is equal to the timing diagram of Figure 2B with the exception of the signals after the sixth point of time t6. Since the time in which the output voltage VOUT is larger than the first, respectively second, threshold value VTH1, VTH2 is smaller than the delay time DEL, the selected current value SEL obtains the higher current value ILA. Dotted lines show how the voltage converter 10 behaves if the delay circuit 40 is omitted.

The delay circuit 40 is configured so that the logical value of a signal at the output of the delay circuit 40 immediately changes, when the comparator signal SOK changes from a first to a second logical value, and, furthermore, the signal at the output of the delay circuit 40 changes with the delay time DEL when the comparator signal SOK changes from the second logical value to the first logical value. The delay circuit 40 is foreseen to prevent a reset of the counter 30 during the delay time DEL. This has the effect that a change from the higher current value ILA to the lowest current value ISM only occurs if the output voltage VOUT remains above the second threshold value VTH2 for a time longer than the delay time DEL.

Thus, the voltage converter 10 directly restarts with the higher current value ILA for the peak current in case a large load is present. Once the comparator signal SOK is asserted, the reset signal for the counter 30 is produced only if the comparator signal SOK stays high more than the delay time DEL. If not that means when the negative threshold VTH1 is crossed very soon because of a strong discharge of the output voltage VOUT, the counter 30 would not be reset and the new charging sequence would start with the largest peak current value ILA since the beginning. The counter 30 has a predetermined cycle number N=2. The delay time DEL of the delay circuit 40 is superior to the t7-t6 interval. In Figure 3B, a counter content equal to 2 and only two levels for the peak current are assumed. The comparator 19 is free of any hysteresis for the output voltage VOUT so that positive and negative thresholds VTH1, VTH2 are coincident.

Assuming a light load condition, at the first point of time t1 the output voltage VOUT is recognized too low and the control signal SNG trips high. Initially the counter signal SI is low and the lowest peak current threshold ISM is selected. As soon as the coil current IC charges up to this value the switch 12 is turned into the non-conducting state and the coil current IC is forced into the diode 17. Because of the light load, the output voltage VOUT is recovered in the meanwhile, at the second point of time t2. Hence when the coil current IC reaches zero, the first sequence is stopped and no other pulses of the control signal SNG are produced. At the third point of time t3 the load current increases suddenly and the output voltage VOUT drops fast. At the fourth point of time t4 the output voltage VOUT crosses the first threshold value VTH1, hence a new sequence starts: The control signal SNG is high again, the counter 30 still forces the lowest current value ISM as a peak current. As a result two charging cycles for the output are not sufficient to recover the output voltage VOUT and the trend is for the output voltage VOUT getting lower and lower. The counter signal SI of the counter 30, set for N=2, as soon as the third consecutive charging cycle starts without the output voltage VOUT being recovered, switches to high and sets the higher current value ILA.

In this way, starting from the fifth point of time t5, the coil current IC increases to higher values than before and the output voltage VOUT is pulled up more strongly. The variation is effective and, at the sixth point of time t6, the output voltage VOUT is recovered properly. At this time it is expected that the counter 30 is reset. Anyhow because of the presence of the delay gate or delay circuit 40 shown in Figure 3A, it is necessary to wait some time before the counter 30 trips back to low status. In this way, in case the load is large enough that the output voltage VOUT drops low at the seventh point of time t7, being a duration between the seventh and the sixth point of time t7-t6 less than the delay time DEL predetermined by the delay circuit 40, the counter 30 would not be reset and the next charging sequence would immediately start with the highest peak current value ILA. Solid versus dotted line show how differently the voltage converter 10 behaves in case the delay circuit 40 is implemented or not. In case the duration between the seventh and the sixth point of time t7-t6 is higher than the delay time DEL, the sequence would start with the lowest current value ISM in any case. This complies with a moderate/light load current condition.

Figure 4A shows a further exemplary embodiment of the voltage converter 10 which is a further development of the above-shown embodiments of the voltage converter. The current sensor 21 is arranged between the switch 12 and the reference potential terminal 15. The current sensor 21 comprises a current sensor element 50 and a current sensor amplifier 51. The current sensor element 50 is inserted in the connection line between the switch 12 and the reference potential terminal 15. The current sensor amplifier 51 couples the current sensor element 50 to an output of the current sensor 21.

Moreover, the control module 20 comprises a further comparator 52. The further comparator 52 comprises a first and a second current source 53, 54. The first and the second current source 53, 54 are connected in series between the converter output 14 and the reference potential terminal 15. A comparator node 55 between the first and the second current source 53, 54 is connected to a further input of the control circuit 33. The first current source 53 connects the converter output 14 to the comparator node 55, whereas the second current source 54 connects the comparator node 55 to the reference potential terminal 15. The control input of the first current source 53 is coupled to the counter output 34 of the counter 30. The output of the current sensor 21 is connected to a control input of the second current source 54.

The current sensor 21 provides the current sense signal SC to the control input of the second current source 54. A replica current IR flows through the second current source 54. Thus, the replica current IR of the second current source 54 is a replica of the current flowing through the current sensor 21 and thus a replica of the current flowing through the switch 12. In case the switch 12 is in a conducting state during the first phase A, the replica current IR of the second current source 54 is also a replica of the coil current IC.

The counter signal SI is provided to the control terminal of the first current source 53. Thus, the first current source 53 is designed to provide a threshold reference current ITH that depends on the counter signal SI. A comparator voltage VTO can be tapped at the comparator node 55 and is provided to the control circuit 33. At the start of the first phase A, the coil current IC flowing through the switch 12 is low and therefore the replica current IR has a lower value than the threshold reference current ITH. This leads to the effect that the comparator voltage VTO obtains a high value at the start of the first phase A. Since the coil current IC rises during the first phase A, the replica current IR also rises until the comparator voltage VTO obtains a low value and, thus, the start of the second phase B is triggered. The further comparator 52 compares the threshold reference current ITH and the replica current IR. The threshold reference current ITH is a function of the selected current value SEL and thus a function of the counter signal SI. The replica current IR is a function of the coil current IC. Thus, the further comparator 52 is designed for comparison of the coil current IC and the selected current value SEL.

Thus, the further comparator 52 provides an effective way to determine the end of the first phase A and to trigger the start of the second phase B. The voltage converter 10 is realized as a hysteretic step-up DC/DC converter.

Figure 4B shows an alternative exemplary embodiment of the voltage converter 10 which is a further development of the above-shown embodiments of the voltage converter. The voltage converter 10 comprises a further switch 60 that replaces the diode 17. The further switch 60 couples the node 23 between the coil 11 and the switch 12 to the converter output 14. A control terminal of the first switch 60 is connected to an additional output of the control circuit 33. Moreover, the voltage converter 10 comprises an additional comparator 61. A first input of the additional comparator 61 is connected to a first terminal of the further switch 60 and a second input of the additional comparator 61 is connected to a second terminal of the further switch 60. The further switch 60 is realized as a FET. The further switch 60 is implemented as a MOSFET. The further switch 60 is designed as a p-channel FET. An output of the additional comparator 61 is connected to an additional input of the control circuit 33.

The control circuit 33 controls the additional switch 60 by a further control signal SPG. The additional comparator 61 provides a further comparator signal SP to the control circuit 33. The further comparator signal SP of the additional comparator 61 has a first logical value if a voltage at the first terminal of further switch 60 is higher than a voltage at the second terminal of the further switch 60. Consequently, the comparator signal SP has a second logical value if the voltage at the first terminal of the further switch 60 is lower than the voltage at the second terminal of the further switch 60. The voltage at the first terminal of the further switch 60 is equal to the voltage at the node 23 between the coil 11 and the switch 12. The voltage at the second terminal of the further switch 60 is equal to the output voltage VOUT. Therefore, the additional comparator 61 indicates whether the voltage at the node 23 between the coil 11 and the switch 12 is higher or lower than the output voltage VOUT. The further switch 60 replaces the diode 17. Thus the further switch 60 is in a non-conducting state if the voltage at the node 23 between the coil 13 and the switch 12 is lower than the output voltage VOUT.

The control circuit 33 sets the further switch 60 in a non-conducting state in the first phase A and in a conducting state during the second phase B. Thus, energy from the coil 11 is provided to the converter output 14 via the further switch 60 in the second phase B. The second phase B is terminated by the comparator signal SP of the additional comparator 61.

A voltage drop occurs at a diode, such as the diode 17, even in case of a current flowing through the diode. This voltage drop is avoided by the replacement of the diode 17 with the further switch 60. Therefore, the efficiency of the voltage converter 10 is increased.

The diode 17 is replaced by the combination of the further switch 60 and the further comparator 61. The further switch 60 is realized as a p-channel MOSFET or a transmission gate. The further comparator 61 fulfills the function of a zero crossing comparator. Said combination accomplishes the same function as the diode 17, but achieves a lower conduction voltage drop.

The hysteretic step-up DC/DC converter 10 operates in the following manner: The control signal SNG is activated by the comparator 19 that recognizes when the output voltage VOUT is lower than the target threshold that is the first threshold value VTH1. As soon as the corresponding switch 12 is turned into the conducting state, the replica current IR is generated to be compared with the threshold reference current ITH. As soon as the replica current IR exceeds the threshold reference current ITH, the switch 12 is turned in the non-conducting state while the further switch 60 driven by further control signal SPG is turned into the conducting state. The charge transfer from the converter input 13 to the converter output 14 is triggered and lasts until the coil current IC reverses polarity, when the zero crossing comparator 61 trips and stops conduction of the further switch 60 to prevent discharge of the converter output 14.

In alternative embodiments, not shown, the diode 17 is replaced by the additional switch 60 also in the embodiments of the voltage converter shown in Figures 1A and 2A.

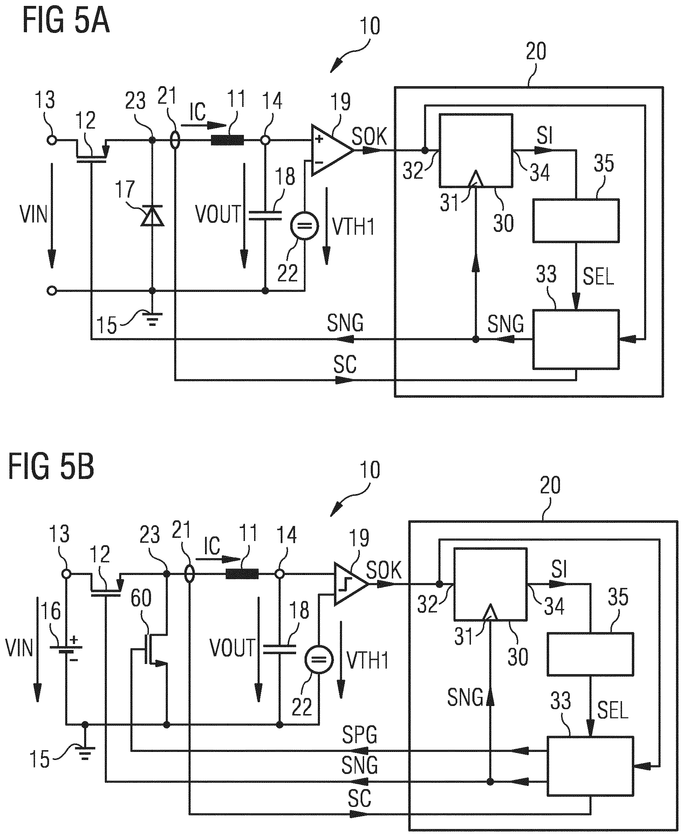

Figure 5A shows a further exemplary embodiment of the voltage converter 10 which is a further development of the above-shown embodiments of the voltage converter. The series circuit of the switch 12 and the coil 11 couples the converter input 13 to the converter output 14. The switch 12 is connected to the converter input 13, whereas the coil 11 is connected to the converter output 14. The node 23 between the switch 12 and the coil 11 is coupled to the reference potential terminal via the diode 17. The switch 12 is implemented as a p-channel FET. The control module 12 can be realized as shown in Figure 1A, 2A, 3A and 4A.

Figure 5B shows an alternative embodiment of the voltage converter 10 which is a further development of the above-shown embodiments of the voltage converter. The diode 17 is replaced by the further switch 60. Thus, the node 23 between the switch 12 and the coil 11 is connected via the further switch 60 to the reference potential terminal 15. The further switch 60 is controlled by the control circuit 33 of the control module 20, as shown in Figure 4B.

In Figures 5A and 5B the voltage converter 10 is realized as a Buck converter. The voltage converter 10 is implemented for step-down conversion.

In an alternative embodiment, not shown, the voltage converter 10 is realized as a Buck-Boost converter. The voltage converter 10 performs a step-up/step-down conversion.

Thus, the voltage converter 10 is realized as hysteretic DC/DC converter that adapts a peak of the coil current IC as a function of the load current. The load current flows to a not-shown load that is connected to the converter output 14.

In case of a high load current the higher current value ILA is selected, whereas in case of a low load current the lowest current value ISM is selected as the selected current value SEL. The described principle can be applied at a Boost converter, a Buck converter and a Boost-Buck converter.

The hysteretic DC/DC converter 10 is designed such that the peak current ISM, ILA that stops the positive ripple of the coil current IC is adjusted by means of the control module 20 implemented as a state machine comprising the counter 30. The counter 30 considers how many times the coil current IC is forced by the regulation loop to reach the peak current value before the output voltage VOUT recovers the desired operating range: In case the number of pulses is sufficiently large, the higher current value ILA for the peak current is chosen.

The number of peak current thresholds ISM, ILA might be more than two. The numbers of counted pulses to determine the step from one peak current value to the superior peak current value might be chosen independently on each other.

The control module 20 sets the initial condition of the next charging sequence: Once the output voltage VOUT is recovered, the peak current starts from the lowest current value ISM as the counter 30 is reset.

Alternatively, the initial peak current might start from the lowest current value ISM or even start from an intermediate current value, depending on the time elapsed between the instant the output voltage VOUT is asserted in the desired range and it is detected too low again. The delay circuit 40 and one or few cascaded logic gates as shown in Figure 3A might be a very effective but not exclusive solution.

Reference Numerals

| 10 | voltage converter |
|----|------|
| 11 | coil |
| 12 | switch |
| 13 | converter input |
| 14 | converter output |
| 15 | reference potential terminal |
| 16 | battery |
| 17 | diode |
| 18 | capacitor |
| 19 | comparator |
| 20 | control module |
| 21 | current sensor |
| 22 | reference voltage source |
| 23 | node |
| 30 | counter |
| 31 | impulse input |
| 32 | reset input |
| 33 | control circuit |
| 34 | counter output |
| 35 | current limit circuit |
| 40 | delay circuit |
| 41 | delay element |
| 42 | logic gate |
| 50 | current sensor element |
| 51 | current sensor amplifier |
| 52 | further comparator |
| 53 | first current source |
| 54 | second current source |
| 55 | comparator node |
| 60 | further switch |
| 61 | additional comparator |
| A | first phase |
| B | second phase |
| DEL | delay time |
| $\Delta V$ | hysteresis |
| IC | coil current |
| ILA | higher current value |
| IR | replica current |
| ISM | lowest current value |
| ITH | threshold reference current |
| SC | current sense signal |
| SEL | selected current value |
| SI | counter signal |
| SNG | control signal |

| SP | further comparator signal |
|----|------|
| SPG | further control signal |
| SOK | comparator signal |
| t | time |
| VIN | input voltage |
| VOUT | output voltage |
| VTH1 | first threshold value |
| VTH2 | second threshold value |
| VTO | comparator voltage |

**Claims**

1. Voltage converter, comprising

    - a coil (11),
    - a switch (12) coupled in series to the coil (11),
    - a current sensor (21) and
    - a control module (20) that is coupled to a control terminal of the switch (12) and is designed to provide a control signal (SNG) to the control terminal of the switch (12) such that a coil current (IC) flowing through the coil (11) is selectively limited to a selected current value of at least two predetermined current values (ILA, ISM),

    wherein the voltage converter (10) operates in a cycle having a first and a second phase (A, B),
    wherein the control module (20) comprises a comparator (19), a further comparator (52) and a counter (30) and is designed to generate the control signal (SNG) such that the switch (12) is in a conducting state in the first phase (A) and in a non-conducting state in the second phase (B) that follows the first phase (A),
    wherein the comparator (19) has a first input coupled to a converter output (14) of the voltage converter (10) and a second input to which a first threshold value (VTH1) is provided, and
    wherein the further comparator (52) is designed for comparison of the coil current (IC) and the selected current value and thus for determining the end of the first phase (A) and for triggering the start of the second phase (B),
    **characterized in**
    **that** the further comparator (52) comprises a first and a second current source (53, 54),
    wherein a control input of the first current source (53) is coupled to a counter output (34) of the counter (30) and an output of the current sensor (21) is connected to a control input of the second current source (54),
    wherein the first and the second current source (53, 54) are connected in series between the converter output (14) and a reference potential terminal (15) and a comparator voltage (VTO) can be tapped at a comparator node (55) between the first and the second current source (53, 54), and

wherein an output of the comparator (19) is coupled to a reset input (32) of the counter (30).

2. Voltage converter according to claim 1, wherein the current sensor (21) is designed to provide a current sense signal (SC) to the control module (20) and the control module (20) is designed to terminate the first phase (A) and to start the second phase (B), when the coil current (IC) rises to the selected current value.

3. Voltage converter according to claim 1 or 2, wherein the control module (20) is designed to select the lowest current value (ISM) of the at least two predetermined current values (ILA, ISM) for a first cycle, when an output voltage (VOUT) of the voltage converter (10) falls below the first threshold value (VTH1).

4. Voltage converter according to one of claims 1 to 3, wherein the control module (20) is designed to select a higher current value (ILA) than the selected current value (ISM) of the at least two predetermined current values (ILA, ISM) for a next cycle, when a number of the cycles at the selected current value (ISM) is larger than a predetermined cycle number and when an output voltage (VOUT) of the voltage converter (10) is below a second threshold value (VTH2).

5. Voltage converter according to one of claims 1 to 4, wherein the control module (20) is designed to keep the selected current value of the at least two predetermined current values (ILA, ISM) for a next cycle, when a number of the cycles at the selected current value is smaller or equal than a predetermined cycle number and when an output voltage (VOUT) of the voltage converter (10) is below a second threshold value (VTH2).

6. Voltage converter according to one of claims 1 to 5, wherein the control module (20) is designed to set the voltage converter (10) in an idle state, when an output voltage (VOUT) of the voltage converter (10) is higher than a second threshold value (VTH2).

7. Voltage converter according to claim 6, wherein the control module (20) is designed to keep the selected current value of the at least two predetermined current values (ILA, ISM) for a next cycle, when a duration of the idle state is shorter than a predetermined duration and when the output voltage (VOUT) of the voltage converter (10) falls below the first threshold value (VTH1) during the duration of the idle state.

8. Voltage converter according to one of claims 1 to 7, wherein the counter (30) is designed to count a number of cycles.

9. Voltage converter according to claim 8, wherein the counter (30) comprises

- an impulse input (31) coupled to the control terminal of the switch (12) for receiving the control signal (SNG) and
- the counter output (34) for providing a counter signal (SI), wherein the selected current value of the at least two predetermined current values (ILA, ISM) is selected depending on the counter signal (SI).

10. Voltage converter according to one of claims 1 to 9, wherein the control module (20) comprises a delay circuit (40) that couples the output of the comparator (19) to the reset input (32) of the counter (30).

11. Voltage converter according to one of claims 1 to 10, wherein the voltage converter (10) is implemented as step-up converter or step-down converter.

12. Method for voltage conversion, comprising

- providing an input voltage (VIN) to a voltage converter (10) which comprises a coil (11) and a switch (12) coupled in series to the coil (11),
- selecting a selected current value of at least two predetermined current values (ILA, ISM),
- providing a control signal (SNG) to a control terminal of the switch (12) such that a coil current (IC) flowing through the coil (11) is limited to the selected current value of the at least two predetermined current values (ILA, ISM), and
- generating an output voltage (VOUT) by the voltage converter (10),

wherein the voltage converter (10) operates in a cycle having a first and a second phase (A, B), wherein a control module (20) comprises a comparator (19), a further comparator (52) and a counter (30) and generates the control signal (SNG) such that the switch (12) is in a conducting state in the first phase (A) and in a non-conducting state in the second phase (B) that follows the first phase (A), wherein the comparator (19) has a first input coupled to a converter output (14) of the voltage converter (10) and a second input to which a first threshold value (VTH1) is provided, and wherein the further comparator (52) is designed for comparison of the coil current (IC) and the selected current value and thus for determining the end of the first phase (A) and for triggering the start of the second phase (B),

**characterized in**

**that** the further comparator (52) comprises a first and a second current source (53, 54), wherein a control input of the first current source (53) is coupled to a counter output (34) of the counter (30) and an output of a current sensor (21) is connected to a control input of the second current source (54),

wherein the first and the second current source (53, 54) are connected in series between the converter output (14) and a reference potential terminal (15) and a comparator voltage (VTO) can be tapped at a comparator node (55) between the first and the second current source (53, 54), and

wherein an output of the comparator (19) is coupled to a reset input (32) of the counter (30).


**Patentansprüche**

1. Spannungswandler, aufweisend

- eine Spule (11),
- einen Schalter (12), der mit der Spule (11) in Reihe geschaltet ist,
- einen Stromsensor (21) und
- ein Steuermodul (20), das mit einem Steueranschluss des Schalters (12) gekoppelt und dazu ausgelegt ist, dem Steueranschluss des Schalters (12) ein Steuersignal (SNG) bereitzustellen, derart, dass ein durch die Spule (11) fließender Spulenstrom (IC) selektiv auf einen ausgewählten Stromwert von mindestens zwei vorbestimmten Stromwerten (ILA, ISM) begrenzt wird,

wobei der Spannungswandler (10) in einem Zyklus mit einer ersten und einer zweiten Phase (A, B) arbeitet,

wobei das Steuermodul (20) einen Komparator (19), einen weiteren Komparator (52) und einen Zähler (30) umfasst und dazu ausgelegt ist, das Steuersignal (SNG) so zu erzeugen, dass der Schalter (12) in der ersten Phase (A) in einem leitenden Zustand und in der zweiten Phase (B), die der ersten Phase (A) folgt, in einem nichtleitenden Zustand ist,

wobei der Komparator (19) einen ersten Eingang aufweist, der mit einem Wandlerausgang (14) des Spannungswandlers (10) gekoppelt ist, und einen zweiten Eingang, an dem ein erster Schwellenwert (VTH1) bereitgestellt wird, und

wobei der weitere Komparator (52) zum Vergleichen des Spulenstroms (IC) und des ausgewählten Stromwertes und damit zum Bestimmen des Endes der ersten Phase (A) und zum Auslösen des Beginns der zweiten Phase (B) ausgelegt ist, **dadurch gekennzeichnet, dass**
der weitere Komparator (52) eine erste und eine zweite Stromquelle (53, 54) umfasst,

wobei ein Steuereingang der ersten Stromquelle (53) mit einem Zählerausgang (34) des Zählers (30) gekoppelt ist und ein Ausgang des Stromsensors (21) mit einem Steuereingang der zweiten Stromquelle (54) verbunden ist,

wobei die erste und zweite Stromquelle (53, 54) zwischen dem Wandlerausgang (14) und einem Bezugspotentialanschluss (15) in Reihe geschaltet sind und eine Komparatorspannung (VTO) an einem Komparatorknoten (55) zwischen der ersten und zweiten Stromquelle (53, 54) abgreifbar ist, und wobei ein Ausgang des Komparators (19) mit einem Rücksetzeingang (32) des Zählers (30) gekoppelt ist.

2. Spannungswandler nach Anspruch 1,
wobei der Stromsensor (21) dazu ausgelegt ist, dem Steuermodul (20) ein Strommesssignal (SC) bereitzustellen, und das Steuermodul (20) dazu ausgelegt ist, die erste Phase (A) zu beenden und die zweite Phase (B) zu starten, wenn der Spulenstrom (IC) auf den ausgewählten Stromwert ansteigt.

3. Spannungswandler nach Anspruch 1 oder 2,
wobei das Steuermodul (20) dazu ausgelegt ist, den niedrigsten Stromwert (ISM) der mindestens zwei vorbestimmten Stromwerte (ILA, ISM) für einen ersten Zyklus auszuwählen, wenn eine Ausgangsspannung (VOUT) des Spannungswandlers (10) unter den ersten Schwellenwert (VTH1) fällt.

4. Spannungswandler nach einem der Ansprüche 1 bis 3,
wobei das Steuermodul (20) dazu ausgelegt ist, einen höheren Stromwert (ILA) als den ausgewählten Stromwert (ISM) der mindestens zwei vorbestimmten Stromwerte (ILA, ISM) für einen nächsten Zyklus auszuwählen, wenn eine Anzahl der Zyklen bei dem ausgewählten Stromwert (ISM) größer als eine vorbestimmte Zyklusanzahl ist und eine Ausgangsspannung (VOUT) des Spannungswandlers (10) unter einem zweiten Schwellenwert (VTH2) liegt.

5. Spannungswandler nach einem der Ansprüche 1 bis 4,
wobei das Steuermodul (20) dazu ausgelegt ist, den ausgewählten Stromwert der mindestens zwei vorbestimmten Stromwerte (ILA, ISM) für einen nächsten Zyklus beizubehalten, wenn eine Anzahl der Zyklen bei dem ausgewählten Stromwert kleiner oder gleich einer vorbestimmten Zyklusanzahl ist und eine Ausgangsspannung (VOUT) des Spannungswandlers (10) unter einem zweiten Schwellenwert (VTH2) liegt.

6. Spannungswandler nach einem der Ansprüche 1 bis 5,
wobei das Steuermodul (20) dazu ausgelegt ist, den Spannungswandler (10) in einen Ruhezustand zu versetzen, wenn eine Ausgangsspannung (VOUT) des Spannungswandlers (10) höher als ein zweiter Schwellenwert (VTH2) ist.

**7.** Spannungswandler nach Anspruch 6, wobei das Steuermodul (20) dazu ausgelegt ist, den ausgewählten Stromwert der mindestens zwei vorbestimmten Stromwerte (ILA, ISM) für einen nächsten Zyklus beizubehalten, wenn eine Dauer des Ruhezustands kürzer als eine vorbestimmte Dauer ist und die Ausgangsspannung (VOUT) des Spannungswandlers (10) während der Dauer des Ruhezustands unter den ersten Schwellenwert (VTH1) fällt.

**8.** Spannungswandler nach einem der Ansprüche 1 bis 7, wobei der Zähler (30) dazu ausgelegt ist, eine Anzahl von Zyklen zu zählen.

**9.** Spannungswandler nach Anspruch 8, wobei der Zähler (30) aufweist:

- einen mit dem Steueranschluss des Schalters (12) gekoppelten Impulseingang (31) zum Empfangen des Steuersignals (SNG) und
- den Zählerausgang (34) zum Bereitstellen eines Zählersignals (SI), wobei der ausgewählte Stromwert der mindestens zwei vorbestimmten Stromwerte (ILA, ISM) abhängig vom Zählersignal (SI) ausgewählt wird.

**10.** Spannungswandler nach einem der Ansprüche 1 bis 9, wobei das Steuermodul (20) eine Verzögerungsschaltung (40) umfasst, die den Ausgang des Komparators (19) mit dem Rücksetzeingang (32) des Zählers (30) koppelt.

**11.** Spannungswandler nach einem der Ansprüche 1 bis 10, wobei der Spannungswandler (10) als Aufwärtswandler oder Abwärtswandler ausgeführt ist.

**12.** Verfahren zur Spannungsumwandlung, umfassend

- Bereitstellen einer Eingangsspannung (VIN) an einen Spannungswandler (10), der eine Spule (11) und einen Schalter (12) umfasst, der mit der Spule (11) in Reihe geschaltet ist,
- Auswählen eines ausgewählten Stromwertes aus mindestens zwei vorbestimmten Stromwerten (ILA, ISM),
- Bereitstellen eines Steuersignals (SNG) an einen Steueranschluss des Schalters (12), derart, dass ein durch die Spule (11) fließender Spulenstrom (IC) auf den ausgewählten Stromwert der mindestens zwei vorbestimmten Stromwerte (ILA, ISM) begrenzt ist, und
- Erzeugen einer Ausgangsspannung (VOUT) durch den Spannungswandler (10),

wobei der Spannungswandler (10) in einem Zyklus mit einer ersten und einer zweiten Phase (A, B) arbeitet, wobei ein Steuermodul (20) einen Komparator (19), einen weiteren Komparator (52) und einen Zähler (30) umfasst und das Steuersignal (SNG) so erzeugt, dass sich der Schalter (12) in der ersten Phase (A) in einem leitenden Zustand und in der zweiten Phase (B), die der ersten Phase (A) folgt, in einem nichtleitenden Zustand befindet, wobei der Komparator (19) einen ersten Eingang aufweist, der mit einem Wandlerausgang (14) des Spannungswandlers (10) gekoppelt ist, und einen zweiten Eingang, an dem ein erster Schwellenwert (VTH1) bereitgestellt wird, und wobei der weitere Komparator (52) zum Vergleichen des Spulenstroms (IC) und des ausgewählten Stromwerts und damit zum Bestimmen des Endes der ersten Phase (A) und zum Auslösen des Beginns der zweiten Phase (B) ausgelegt ist, **dadurch gekennzeichnet, dass** der weitere Komparator (52) eine erste und eine zweite Stromquelle (53, 54) umfasst, wobei ein Steuereingang der ersten Stromquelle (53) mit einem Zählerausgang (34) des Zählers (30) gekoppelt ist und ein Ausgang des Stromsensors (21) mit einem Steuereingang der zweiten Stromquelle (54) verbunden ist, wobei die erste und zweite Stromquelle (53, 54) zwischen dem Wandlerausgang (14) und einem Bezugspotentialanschluss (15) in Reihe geschaltet sind und eine Komparatorspannung (VTO) an einem Komparatorknoten (55) zwischen der ersten und zweiten Stromquelle (53, 54) abgreifbar ist, und wobei ein Ausgang des Komparators (19) mit einem Rücksetzeingang (32) des Zählers (30) gekoppelt ist.

**Revendications**

**1.** Convertisseur de tension, comprenant

- une bobine (11),
- un commutateur (12) couplé en série à la bobine (11),
- un capteur de courant (21) et
- un module de commande (20) qui est couplé à une borne de commande du commutateur (12) et est conçu pour fournir un signal de commande (SNG) à la borne de commande du commutateur (12) de telle sorte qu'un courant de bobine (IC) passant par la bobine (11) soit sélectivement limité à une valeur de courant sélectionnée d'au moins deux valeurs de courants prédéterminées (ILA, ISM),

sachant que le convertisseur de tension (10) fonctionne dans un cycle ayant une première et une deuxième phase (A, B),

sachant que le module de commande (20) comprend un comparateur (19), un comparateur supplémentaire (52) et un compteur (30) et est conçu pour générer le signal de commande (SNG) de telle sorte que le commutateur (12) soit dans un état conducteur dans la première phase (A) et dans un état non conducteur dans la deuxième phase (B) qui suit la première phase (A),

sachant que le comparateur (19) présente une première entrée couplée à une sortie de convertisseur (14) du convertisseur de tension (10) et une deuxième entrée à laquelle une première valeur seuil (VTH1) est fournie, et sachant que le comparateur supplémentaire (52) est conçu pour comparer le courant de bobine (IC) et la valeur de courant sélectionnée et dès lors pour déterminer la fin de la première phase (A) et pour déclencher le démarrage de la deuxième phase (B),

**caractérisé en ce que**

le comparateur supplémentaire (52) comprend une première et une deuxième source de courant (53, 54),

sachant qu'une entrée de commande de la première source de courant (53) est couplée à une sortie de compteur (34) du compteur (30) et une sortie du capteur de courant (21) est connectée à une entrée de commande de la deuxième source de courant (54), sachant que la première et la deuxième source de courant (53, 54) sont connectées en série entre la sortie de convertisseur (14) et une borne de potentiel de référence (15) et une tension de comparateur (VTO) peut être soutirée au niveau d'un noeud de comparateur (55) entre la première et la deuxième source de courant (53, 54), et sachant qu'une sortie du comparateur (19) est couplée à une entrée de réinitialisation (32) du compteur (30).

2.  Convertisseur de tension selon la revendication 1, sachant que le capteur de courant (21) est conçu pour fournir un signal de détection de courant (SC) au module de commande (20) et le module de commande (20) est conçu pour mettre fin à la première phase (A) et pour démarrer la deuxième phase (B) lorsque le courant de bobine (IC) augmente à la valeur de courant sélectionnée.

3.  Convertisseur de tension selon la revendication 1 ou 2,
sachant que le module de commande (20) est conçu pour sélectionner la valeur de courant la plus basse (ISM) des au moins deux valeurs de courant prédéterminées (ILA, ISM) pour un premier cycle lorsqu'une tension de sortie (VOUT) du convertisseur de tension (10) chute sous la première valeur seuil (VTH1).

4.  Convertisseur de tension selon l'une des revendications 1 à 3,
sachant que le module de commande (20) est conçu pour sélectionner une valeur de courant plus élevée (ILA) que la valeur de courant sélectionnée (ISM) des au moins deux valeurs de courant prédéterminées (ILA, ISM) pour un prochain cycle lorsqu'un nombre des cycles à la valeur de courant sélectionnée (ISM) est supérieur à un nombre de cycles prédéterminé et lorsqu'une tension de sortie (VOUT) du convertisseur de tension (10) est inférieure à une deuxième valeur seuil (VTH2).

5.  Convertisseur de tension selon l'une des revendications 1 à 4,
sachant que le module de commande (20) est conçu pour maintenir la valeur de courant sélectionnée des au moins deux valeurs de courant prédéterminées (ILA, ISM) pour un prochain cycle lorsqu'un nombre des cycles à la valeur de courant sélectionnée est inférieur ou égal à un nombre de cycles prédéterminé et lorsqu'une tension de sortie (VOUT) du convertisseur de tension (10) est inférieure à une deuxième valeur seuil (VTH2).

6.  Convertisseur de tension selon l'une des revendications 1 à 5,
sachant que le module de commande (20) est conçu pour mettre le convertisseur de tension (10) dans un état de marche à vide lorsqu'une tension de sortie (VOUT) du convertisseur de tension (10) est supérieure à une deuxième valeur seuil (VTH2).

7.  Convertisseur de tension selon la revendication 6, sachant que le module de commande (20) est conçu pour maintenir la valeur de courant sélectionnée des au moins deux valeurs de courant prédéterminées (ILA, ISM) pour un prochain cycle lorsqu'une durée de l'état de marche à vide est plus courte qu'une durée prédéterminée et lorsque la tension de sortie (VOUT) du convertisseur de tension (10) chute sous la première valeur seuil (VTH1) pendant la durée de l'état de marche à vide.

8.  Convertisseur de tension selon l'une des revendications 1 à 7,
sachant que le compteur (30) est conçu pour compter un nombre de cycles.

9.  Convertisseur de tension selon la revendication 8, sachant que le compteur (30) comprend

    - une entrée d'impulsion (31) couplée à la borne de commande du commutateur (12) pour recevoir le signal de commande (SNG) et
    - la sortie de compteur (34) pour fournir un signal de compteur (SI), sachant que la valeur de courant sélectionnée des au moins deux valeurs de courant prédéterminées (ILA, ISM) est sélectionnée en fonction du signal de compteur (SI).

10. Convertisseur de tension selon l'une des revendications 1 à 9,
sachant que le module de commande (20) comprend un circuit à retard (40) qui couple la sortie du comparateur (19) à l'entrée de réinitialisation (32) du compteur (30) .

11. Convertisseur de tension selon l'une des revendications 1 à 10,
sachant que le convertisseur de tension (10) est implémenté comme convertisseur élévateur de tension ou convertisseur abaisseur de tension.

12. Procédé de conversion de tension, comprenant

   - la fourniture d'une tension d'entrée (VIN) à un convertisseur de tension (10) qui comprend une bobine (11) et un commutateur (12) couplé en série à la bobine (11),
   - la sélection d'une valeur de courant sélectionnée d'au moins deux valeurs de courant prédéterminées (ILA, ISM),
   - la fourniture d'un signal de commande (SNG) à une borne de commande du commutateur (12) de telle sorte qu'un courant de bobine (IC) passant par la bobine (11) soit limité à la valeur de courant sélectionnée des au moins deux valeurs de courants prédéterminées (ILA, ISM), et
   - la génération d'une tension de sortie (VOUT) par le convertisseur de tension (10),

sachant que le convertisseur de tension (10) fonctionne dans un cycle ayant une première et une deuxième phase (A, B),
sachant qu'un module de commande (20) comprend un comparateur (19), un comparateur supplémentaire (52) et un compteur (30) et génère le signal de commande (SNG) de telle sorte que le commutateur (12) soit dans un état conducteur dans la première phase (A) et dans un état non conducteur dans la deuxième phase (B) qui suit la première phase (A),
sachant que le comparateur (19) présente une première entrée couplée à une sortie de convertisseur (14) du convertisseur de tension (10) et une deuxième entrée à laquelle une première valeur seuil (VTH1) est fournie, et sachant que le comparateur supplémentaire (52) est conçu pour comparer le courant de bobine (IC) et la valeur de courant sélectionnée et dès lors pour déterminer la fin de la première phase (A) et pour déclencher le démarrage de la deuxième phase (B),
**caractérisé en ce que**
le comparateur supplémentaire (52) comprend une première et une deuxième source de courant (53, 54),

sachant qu'une entrée de commande de la première source de courant (53) est couplée à une sortie de compteur (34) du compteur (30) et une sortie du capteur de courant (21) est connectée à une entrée de commande de la deuxième source de courant (54), sachant que la première et la deuxième source de courant (53, 54) sont connectées en série entre la sortie de convertisseur (14) et une borne de potentiel de référence (15) et une tension de comparateur (VTO) peut être soutirée au niveau d'un noeud de comparateur (55) entre la première et la deuxième source de courant (53, 54), et sachant qu'une sortie du comparateur (19) est couplée à une entrée de réinitialisation (32) du compteur (30).

FIG 1A

FIG 1B

# FIG 2A

# FIG 2B

# FIG 3A

# FIG 3B

EP 2 871 762 B1

# FIG 4A

# FIG 4B

FIG 5A

FIG 5B

**EP 2 871 762 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090160422 A1
- EP 1087507 A1